(19) Europäisches Patentamt
European Patent Office
Office européen des brevets

(11) Veröffentlichungsnummer: **0 185 997**
**A1**

# (12) EUROPÄISCHE PATENTANMELDUNG

(21) Anmeldenummer: 85115463.3

(22) Anmeldetag: 05.12.85

(51) Int. Cl.[4]: G 02 C 13/00

(30) Priorität: 22.12.84 DE 3447119

(43) Veröffentlichungstag der Anmeldung: 02.07.86 Patentblatt 86/27

(84) Benannte Vertragsstaaten: AT BE CH DE FR GB IT LI LU NL SE

(71) Anmelder: Wehmeier, Reinhard
Schweriner Strasse 19
D-4803 Steinhagen(DE)

(72) Erfinder: Wehmeier, Reinhard
Schweriner Strasse 19
D-4803 Steinhagen(DE)

(74) Vertreter: Patentanwälte TER MEER - MÜLLER - STEINMEISTER
Artur-Ladebeck-Strasse 51
D-4800 Bielefeld 1(DE)

## (54) Demonstrationsgerät zur Veranschaulichung der erforderlichen Glasgrössen für Brillen.

(57) Ein Demonstrationsgerät (10) zur Veranschaulichung der erforderlichen Glasgrößen für Brillen (44) umfaßt eine Grundplatte (12) mit zwei waagerechten Führungsschlitzen (16) und einem senkrechten Führungsschlitz (18). In den waagerechten Führungsschlitzen (16) sind zwei Schlitten (24) verschiebbar, die jeweils eine kreisförmige Schablone (28) tragen. Der Durchmesser der Schablone (28) entspricht dem Durchmesser handelsüblicher Rohlinge für Brillengläser. Mit Hilfe der Schlitten (24) kann der Mittenabstand der Schablonen (28) auf den Pupillenabstand des Benutzers eingestellt werden.

Ein in dem senkrechten Führungsschlitz (18) beweglicher Schieber (32) weist eine Anlagekante (38) für den unteren Rand des Brillengestells (44) auf. Dieser Schieber wird auf den gemessenen Abstand zwischen der Pupille des Benutzers und dem unteren Rand des Brillengestells eingestellt. Anhand der Überdeckung zwischen den Schablonen (28) und den Rahmenöffnungen (48) des Brillengestells kann abgelesen werden, ob Normalgläser oder übergroße Brillengläser verwendet werden müssen.

Fig. 1
10
II
28
24
40
20
12
16
26
30
44
48
18
22
46
34
32
42
36
38

EP 0 185 997 A1

Croydon Printing Company Ltd

DEMONSTRATIONSGERÄT ZUR VERANSCHAULICHUNG DER ERFORDERLICHEN GLASGRÖSSEN FÜR BRILLEN

Die Erfindung betrifft ein Demonstrationsgerät zur Veranschaulichung der erforderlichen Glasgrößen für Brillen.

Die Gläser für optische Brillen werden aus kreisförmigen Rohlingen hergestellt, die industriell in bestimmten Normgrößen gefertigt werden. Die Gläser sind derart in das Brillengestell einzusetzen. daß der optische Mittelpunkt, d.h., der geometrische Mittelpunkt des ursprünglichen Rohlings, auf die Pupille des Benutzers zentriert ist. Bei modernen Formen von Brillengestellen kommt es häufig vor, daß der maximale Abstand zwischen der Pupille des Benutzers und dem Rand des Brillengestells größer ist als der Radius der regulär verwendeten Rohlinge. In diesem Fall müssen sogenannte übergroße Gläser verwendet werden, die aus Rohlingen mit größerem Durchmesser hergestellt und daher teurer als normale Brillengläser sind. Dieses Erfordernis ist jedoch dem Kunden vielfach nur schwer verständlich zu machen, da auch bei Gestellen, die übergroße Gläser erfordern, die von dem Rahmen des Brillengestells umschlossene Fläche verhältnismäßig klein erscheint.

Der Erfindung liegt die Aufgabe zugrunde, ein Demonstrationsgerät zu schaffen, das es ermöglicht, dem Kunden die Notwendigkeit der Verwendung übergroßer Gläser zu veranschaulichen.

Diese Aufgabe wird erfindungsgemäß gelöst durch ein Demonstrationsgerät mit einer Grundplatte mit zwei auf einer Linie ausgerichteten, quer verlaufenden Führungsschlitzen und einem längs verlaufenden Führungsschlitz, zwei in den quer verlaufenden Führungsschlitzen verschiebbaren Schlitten, einem in dem längs verlaufenden Führungsschlitz verschiebbaren Schieber mit einer parallel zu den quer verlaufenden Führungsschlitzen verlaufenden Anlegekante und zwei kreisförmigen, jeweils auf einem der Schlitten montierten Schablonen, deren Durchmesser dem Durchmesser von Rohlingen für Brillengläser entspricht.

Das erfindungsgemäße Demonstrationsgerät wird wie folgt eingesetzt.

Wenn der Benutzer ein bestimmtes Brillengestellt ausgewählt hat, so mißt der Optiker beispielsweise mit Hilfe eines Meßstabes den Abstand von der Mitte der Pupille zum unteren Rand des Rahmens des Brillengestells. Der Schieber des Demonstrationsgerätes wird derart eingestellt, daß der gemessene Abstand mit dem Abstand zwischen der Anlegekante des Schiebers und einer Geraden durch die Mittelpunkte der beiden kreisförmigen Schablonen übereinstimmt. Die beiden Schlitten werden derart eingestellt, daß der Mittenabstand der beiden Schablonen mit dem Pupillenabstand des Benutzers übereinstimmt. Sodann wird das Brillengestell derart auf die Grundplatte aufgelegt, daß der untere Rand des Gestell-Rahmens an der Anlegekante anliegt. Die Position der Schablonen, die die Glasrohlinge symbolisieren, in Bezug auf das Gestell entspricht somit einer korrekten Zentrierung der Brillengläser und veranschaulicht dem Benutzer den späteren Sitz der Gläser in dem Gestell. Wenn die Rahmenöffnungen des Gestells nicht vollständig durch die Schablonen abgedeckt werden, so ist für den Benutzer unmittelbar einsichtig, daß für die Herstellung der Gläser größere Rohlinge verwendet werden müssen.

Bevorzugt sind die Schablonen mit Hilfe von Halterungen lösbar in vorgegebenen Positionen auf den Schlitten montiert. Die Halterung kann beispielsweise durch einen von dem Schlitten aufragenden Stift gebildet sein, der in eine zentrale Bohrung der Schablone eingreift. Bevorzugt wird die Halterung jedoch durch zwei Stifte auf jedem Schlitten gebildet, die in zwei außermittige Öffnungen der Schablone eingreifen.

Die Schablonen sind bevorzugt als durchsichtige Folien ausgebildet, und die Schlitten sind jeweils mit einer den Mittelpunkt der Schablone angebenden Markierung versehen. An den quer verlaufenden Führungsschlitzen sind Längenskalen vorgesehen, die durch die durchsichtigen Schablonen hindurch sichtbar sind und ein rasches Einstellen des Pupillenabstands ermöglichen. Eine weitere Längenskala ist senkrecht zu der Anlegkante des Schiebers angeordnet. Diese Skala gibt den Abstand zu der Geraden durch die Mittelpunkte der Schablonen an und erleichtert somit das Einstellen des Schiebers.

Im folgenden wird ein bevorzugtes Ausführungsbeispiel der Erfindung anhand der Zeichnung näher erläutert.

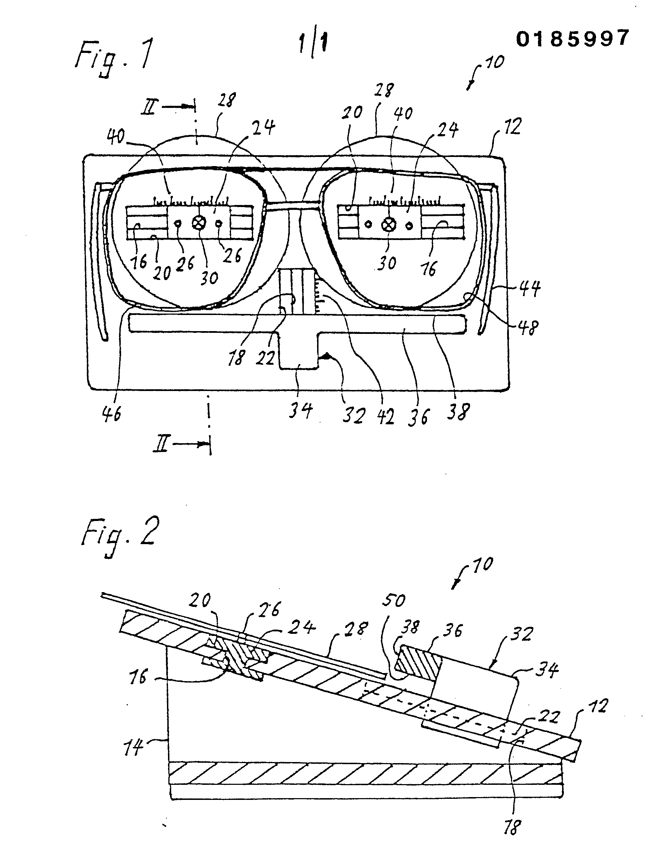

Fig. 1 zeigt ein erfindungsgemäßens Demonstrationsgerät in der Draufsicht;

Fig. 2 ist ein Schnitt längs der Linie II-II in Figur 1.

Ein erfindungsgemäßes Demonstrationsgerät 10 umfaßt eine Grundplatte 12, die pultförmig auf einem Fuß 14 angeordnet ist. Die Grundplatte 12 weist zwei auf einer Linie ausgerichtete, quer verlaufende Führungsschlitze 16 - im folgenden als waagerechte Schlitze 16 bezeichnet - und einen längs verlaufenden Führungsschlitz 18 auf, der im folgenden als senkrechter Schlitz 18 bezeichnet wird. An den Längsrändern der waagerechten Schlitze 16 und des senkrechten Schlitzes 18 sind jeweils flache Aussparungen 20,22 vorgesehen.

In den waagerechten Schlitzen 16 ist jeweils ein Schlitten 24 geführt. Jeder der Schlitten 24 weist einen Doppel-T-förmigen Querschnitt auf und ist derart in der Aussparung 20 angeordnet, daß seine obere Oberfläche mit der Oberfläche der Grundplatte 12 fluchtet. Auf der oberen Oberfläche des Schlittens befinden sich zwei aufragende Stifte 26. Eine kreisförmige Schablone 28 aus einer durchsichtigen Kunststoffolie ist mit zwei Öffnungen für die Stifte 26 versehen und derart auf die Stifte aufgesteckt, daß ihr Mittelpunkt mit einer Markierung 30 auf dem Schlitten übereinstimmt.

In dem senkrechten Schlitz 18 und den Aussparungen 22 ist ein T-förmiger Schieber 32 angeordnet, der einen parallel zu dem senkrechten Schlitz 18 verlaufenden Fuß 34 und eine parallel zu den waagerechten Schlitzen 16 verlaufende Schiene 36 mit einer Anlegekante 38 aufweist.Die Querschnittsform des Fußes 34 stimmt annähernd mit der Querschnittsform der Schlitten 24 überein. Die Schiene 36 bildet mit der Oberfläche der Grundplatte einen Zwischenraum 50, so daß er sich über die Schablonen 28 schieben läßt.

Die Schlitten 24 sind in den waagerechten Schlitzen 16 verschiebbar, so daß der Abstand zwischen den Markierungen 30 auf den Pupillenabstand des Benutzers eingestellt werden kann. Das Einstellen wird durch Längenskalen 40 an den Rändern der Aussparungen 20 erleichtert. Der Schieber 32 ist in dem senkrechten Schlitz 18 verschiebbar, so daß mit Hilfe einer Skala 42 der Abstand zwischen der Anlegekante 38 und einer Geraden durch die Mittelpunkts-Markierungen 30 auf einen Wert eingestellt werden kann. der dem gemessenen Abstand zwischen der Pupille des Benutzers und dem unteren Rand eines Brillengestells 44 entspricht. Das Brillengestell 44 wird sodann derart auf die Grundplatte 12 aufgelegt, daß der untere Rand 46 des Brillengestells an der Anlegekante 38 anliegt.

Die Schablonen 28 geben die Durchmesser handelsüblicher Rohlinge für Brillengläser an und veranschaulichen die Positionen, in denen die Brillengläser in das Brillengestell 44 eingesetzt werden sollen. Im gezeigten Beispiel ist deutlich zu erkennen, daß die Schablonen 28 die Rahmenöffnungen 48 des Brillengestells nicht vollständig abdecken. Auf diese Weise wird für den Benutzer anschaulich gemacht, daß Brillengläser aus größeren Rohlingen verwendet werden müssen.

Die Schablonen 28 können von den Stiften 26 gelöst und durch größere Schablonen entsprechend größeren Brillenglas-Rohlingen ersetzt werden.

In einer abgewandelten Ausführungsform sind die Schablonen 28 fest mit den Schlitten 24 verbunden. In diesem Fall weisen die Schlitten einen T-förmigen Querschnitt auf, so daß zum Auswechseln der Schablonen die Schlitten aus den Schlitzen 16 herausgenommen werden können.

Während bei der gezeigten Ausführungsform der Schieber 32 in einem einzigen Führungsschlitz 18 geführt ist, können in einer anderen Ausführungsform mehrere Führungsschlitze für den Schieber vorgesehen sein, so daß ein Verkanten des Schiebers vermieden wird.

## PATENTANSPRÜCHE

1. Demonstrationsgerät zur Veranschaulichung der erforderlichen Glasgrößen für Brillen, g e k e n n z e i c h n e t durch
- eine Grundplatte (12) mit zwei auf einer Linie ausgerichteten quer verlaufenden Führungsschlitzen (16) und einem längs verlaufenden Führungsschlitz (18),
- zwei in den quer verlaufenden Führungsschlitzen verschiebbare Schlitten (24),
- einen in dem längs verlaufenden Führungsschlitz verschiebbaren Schieber (32) mit einer parallel zu den quer verlaufenden Führungsschlitzen verlaufenden Anlegekante (38) und
- zwei kreisförmige, jeweils auf einem der Schlitten (24) montierte Schablonen (28), deren Durchmesser dem Durchmesser von Rohlingen für Brillengläser entspricht.

2. Demonstrationsgerät nach Anspruch 1, dadurch g e k e n n z e i c h n e t, daß die Schablonen (28) mit Hilfe von Halterungen (26) lösbar in vorgegebenen Positionen auf den Schlitten (24) montiert sind.

3. Demonstrationsgerät nach Anspruch 2, dadurch g e k e n n z e i c h n e t, daß die Halterungen Stifte (26) umfassen, die sich durch Bohrungen in den Schablonen (28) erstrecken.

4. Demonstrationsgerät nach Anspruch 3, dadurch g e k e n n z e i c h n e t, daß jeder der Schlitten (24) zwei Stifte (26) aufweist, die sich durch außermittig in der Schablone (28) angeordnete Bohrungen erstrecken.

5. Demonstrationsgerät nach einem der vorhergehenden Ansprüche, dadurch g e k e n n z e i c h n e t, daß die Schablonen (28) durch durchsichtige Folien gebildet sind.

6. Demonstrationsgerät nach einem der vorhergehenden Ansprüche, dadurch g e k e n n z e i c h n e t, daß mehrere längs verlaufende Schlitze zur Führung des Schiebers (32) vorgesehen sind.

7. Demonstrationsgerät nach einem der vorhergehenden Ansprüche, dadurch g e k e n n z e i c h n e t, daß längs den Rändern der quer verlaufenden Führungsschlitze (16) flache Aussparungen (20) vorgesehen sind, die die oberen Bereiche der Schlitten (24) derart aufnehmen, daß die Schlitten mit der Oberfläche der Grundplatte (12) fluchten.

8. Demonstrationsgerät nach Anspruch 5, dadurch g e - k e n n z e i c h n e t, daß an den quer verlaufenden Führungsschlitzen (16) Längenskalen (40) vorgesehen sind und daß die Schlitten (24) jeweils in der der Mitte der Schablone (28) entsprechenden Position eine Markierung aufweisen.

0185997

Fig. 1
10
II
28
40
24
20
12
16
26
30
44
48
18
22
46
34
32
42
36
38

Fig. 2
10
20
26
24
28
50
38
36
32
34
16
22
12
14
18

Europäisches Patentamt

# EUROPÄISCHER RECHERCHENBERICHT

0185997

Nummer der Anmeldung

EP 85 11 5463

| Kategorie | EINSCHLÄGIGE DOKUMENTE<br>Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| | | | G 02 C 13/00 |
| A | EP-A-0 021 998 (J.L. NEGRONI)<br>* Ansprüche *<br>--- | 1 | |
| A | US-A-4 160 330 (B. GROLMAN)<br>* Ansprüche *<br>--- | 1 | |
| A | DE-A-2 644 460 (AMERICAN OPTICAL CORP.)<br>* Ansprüche *<br>--- | 1 | |
| A | FR-A-2 494 106 (B. KNOBLOCH)<br>* Ansprüche *<br>----- | 1 | |
| | | | RECHERCHIERTE SACHGEBIETE (Int. Cl.4) |
| | | | G 02 C 13/00 |

Der vorliegende Recherchenbericht wurde für alle Patentansprüche erstellt

| Recherchenort | Abschlußdatum der Recherche | Prüfer |
|---|---|---|
| DEN HAAG | 21-03-1986 | CALLEWAERT-HAEZEBROU |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82